# EUROPEAN PATENT APPLICATION

(11) **EP 2 182 710 A2**
(43) Date of publication of application: **05.05.2010**
(21) Application number: 10152438.7
(22) Date of filing: 14.12.2004
(51) Int. Cl.: H04M 1/725

(54) **Terminal device, and message display method and program for the same**

(30) Priority: 06.08.2004 JP 2004231621
(62) Divisional of application: 04257766.8
(71) Applicant: Fujitsu Limited, Kawasaki-shi, Kanagawa 211-8588 (JP)
(72) Inventor: Houmura, Toshikazu, Kawasaki-shi Kanagawa 211-8588 (JP); Yoshihara, Kazuhiro, Yokohama-shi, Kanagawa 222-0033 (JP); Yamaguchi, Takako, Yokohama-shi, Kanagawa 222-0033 (JP); Nagaoka, Kazuma, Kawasaki-shi Kanagawa 211-8588 (JP)
(74) Representative: Fenlon, Christine Lesley

(57) **Abstract**

The present invention relates to message control of a terminal device provided with a messaging function and acts to enhance the display function for new and old events such as reception of plural pieces of mail. The terminal device provided with a messaging function that indicates an event comprises a first display mark (unread-mail icon) indicative of an event; and a second display mark (newly-incoming-mail icon) indicative of a new event generated while the first display mark is being displayed, the second display mark indicating the new event in a different form from that of the first displaymark, wherein an old and the new events are respectively indicated by the first and second display marks.

## Description

### BACKGROUND OF THE INVENTION

1. Field of the Invention

The present invention relates generally to message display control of a terminal device provided with a messaging function and, more particularly, to a terminal device such as a mobile telephone and a personal computer, provided with a display function for new and old events such as arrival of mail, and to a message display method and message display program for the terminal device.

2. Description of the Related Art

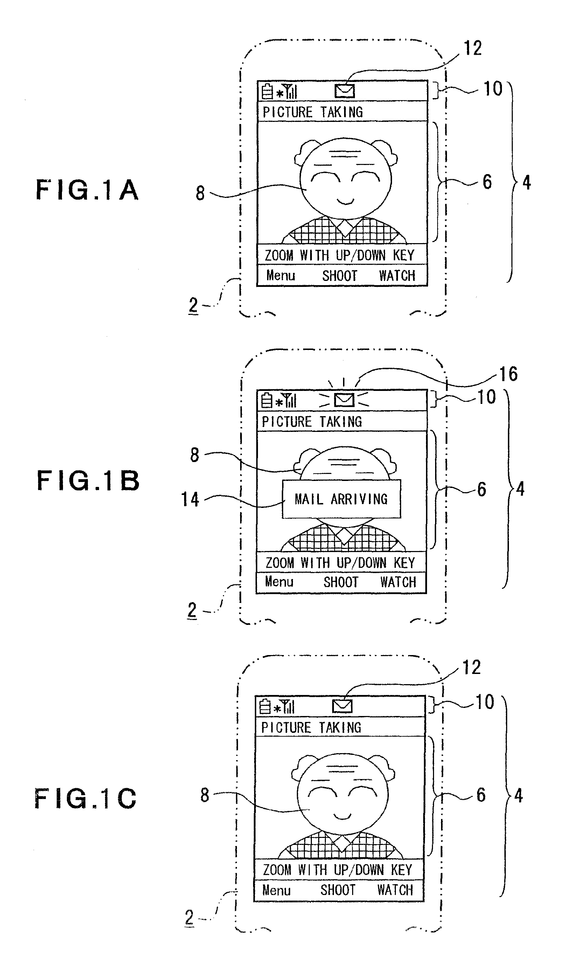

When e-mail (hereinafter, simply referred to as "mail") arrives at a mobile telephone, a message such as a ringing sound, vibration, an image display, etc. notifying of the arrival of the mail and a message indicating that the incoming mail is not yet read are displayed on a display unit of the mobile telephone. Such messages notifying of arrival of mail and that the mail is not yet read will be described referring to Figs. 1A to 1C. Figs. 1A to 1C show an embodiment of a display unit of a mobile telephone provided with a picture taking function.

In the case of a mobile telephone 2, a shot image 8 is displayed in a display area 6 in the central portion of a display unit 4 during picture taking, as shown in Fig. 1A. In this case, when unread mail is present, an icon 12 indicating the presence of the unread mail is displayed in a display area 10. Such an icon display is a display function for notifying of creation of various events such as arrival of mail, etc.

By the way, when mail arrives during picture taking, as shown in Fig. 1B, a message 14 indicating the arrival of the mail is displayed in the shot image 8 in the display area 6 as well as an icon 12 in the display area 10 is changed to a flashing display mark 16 and the arrival of the new mail is indicated by the flashing. Even during picture taking, a user can recognize the arrival of the mail from the fact that the icon 12 has been changed to the flashing display mark 16.

However, the flashing display mark 16 of the icon 12 is cancelled in a predetermined time period and, as shown in Fig. 1C, the icon 12 is changed to a display for the unread mail. When the picture taking is continued, though the mail arrived newly is included in the unread mail, the opportunity to confirm the mail is lost because the icon 12 only indicates the unread mail.

As to such arrival of mail, Japanese Patent Application Laid-Open Publication No. 2003-198665 discloses that, whenincoming mail is received during creation of another mail, an icon display is flashed if the creation of another mail is continued without confirming the received mail. However, even for this flashing display of the icon (PICT) described in Japanese Patent Application Laid-Open Publication No. 2003-198665, the flashing is discontinued when a predetermined time period has passed.

As described above, in case that incoming mail is received in a state where unread mail is present and flashing of an icon caused to flash at the time of the reception is discontinued, the icon becomes only a display for the unread mail. Therefore, the opportunity for a user to confirm the incoming mail may be lost.

Especially, in case that a mobile telephone is also caused to additionally execute a function such as picture taking, etc., a user may forget the presence of incoming mail because, though the user has received a notice by flashing of an icon or a ringing sound, the notice is changed to a display for the unread mail after a predetermined time period has passed. When such a display for the incoming mail has changed to the display for the unread mail, the user can not learn when the mail has arrived until the user actually opens the mail.

As to such inconvenience as the case where incoming mail has arrived when unread mail is present and the display for incoming mail is changed back to a display for the unread mail, no disclosure about this task can be found and neither disclosure nor suggestion, about the solution, thereof can be found when Japanese Patent Application Laid-Open Publication No. 2003-198665 is referred to.

### SUMMARY OF THE INVENTION

The present invention relates to message control of a terminal device provided with a messaging function and an object thereof is to enhance the display function for new and old events such as reception of plural pieces of mail.

Another object of the present invention is to enhance a notifying function for incoming mail when unread mail is present.

In order to achieve the above objects, according to an aspect of the present invention there is provided a terminal device provided with a messaging function that indicates an event, the terminal device comprising a first display mark indicative of an event; and a second display mark indicative of a new event generated while the first display mark is being displayed, the second display mark indicating the new event in a different form from that of the first displaymark, wherein an old and the new events are respectively indicated by the first and second display marks. With such a configuration, as to a plurality of consecutive events generated on the terminal device, confirmation for those events can be facilitated because those new and old events are respectively notified of by different displays.

In the terminal device of the present invention, to attain the above objects, the form of the first display mark may be changed in response to generation of the new event and, after a predetermined time period has passed, the form of the first display mark may be restored to the form that the first display mark had before the generation of the new event and, concurrently, the second display mark may be displayed. With such a configuration, the accuracy of recognition can be improved because the difference between the displays is emphasized.

In the terminal device of the present invention, to attain the above objects, the second display mark may be displayed in juxtaposition with the first display mark, or may be displayed instead of the first display mark. With such a configuration, the old and new events can be confirmed by placing the first and the second display marks in juxtaposition and, when only the second display mark is placed, arrival of a new event can be recognized.

In the terminal device of the present invention, to attain the above objects, the second display mark may be deleted in response to development of the new event on a screen. With such a configuration, the user can confirm the content of the new event through the development of the new event such that the display is not necessary thereafter.

In the terminal device of the present invention, to attain the above objects, the event may be reception of mail and the new event may be the newly incoming mail. With such a configuration, the unread mail and the arrival of incoming mail can be distinguished therebetween and the notifying function for the incoming mail can be enhanced.

In order to achieve the above objects, according to another aspect of the present invention there is provided a terminal device provided with a messaging function indicating arrival of mail, the terminal device comprising a first display mark indicative of arrival of mail; and a second display mark indicative of mail having arrived newly during the first display mark is being displayed, and the second display mark indicating the newly incoming mail in a different form from that of the first display mark, juxtaposed with the first display mark, wherein an old and a new arrival of mail are respectively indicated by the first and second display marks.

In the terminal device of the present invention, to attain the above objects, the form of the first display mark may be changed in response to arrival of the newly incoming mail and, after a predetermined time period has passed, the form of the first display mark may be restored to the form that the first display mark had before the arrival of the newly incoming mail and, concurrently, the second display mark may be displayed.

In order to achieve the above objects, according to still another aspect of the present invention, there is provided a message display method for a terminal device provided with a messaging function that indicates an event, the method comprising forming a first display mark indicative of an event on a screen; and forming a second display mark indicative of a new event generated while the first display mark is being displayed, the second display mark indicating the new event in a different form from that of the first display mark. With such a process, recognizability of the new and old events can be enhanced and forgetting to confirm an important event, etc., can be prevented.

To attain the above objects, the message display method of the present invention for a terminal device may further comprise changing the form of the first display mark in response to generation of the new event and, after a predetermined time period has passed, restoring the form of the first display mark to the form that the first display mark had before the generation of the new event and, concurrently, displaying the second display mark.

To attain the above objects, the message display method of the present invention for a terminal device may further comprise displaying the second display mark in juxtaposition with the first display mark, or displaying the second display mark instead of the first display mark.

To attain the above objects, the message display method of the present invention for a terminal device may further comprise deleting the second display mark in response to development of the new event on a screen.

In order to achieve the above objects, according to yet another aspect of the present invention there is provided a message display method for a terminal device provided with a messaging function that indicates arrival of mail, the method comprising generating a first display mark indicative of arrival of mail on a screen; generating a second display mark indicative of arrival of newly incoming mail instead of the first display mark in case that the screen is being used by a functional process in execution; and generating a third display mark indicative of arrival of newly incoming mail separately from the first display mark in case that the screen is not being used by a functional process in execution.

In order to achieve the above objects, according to a further aspect of the present invention there is provided a message display method for a terminal device provided with a messaging function indicating arrival of mail, the method comprising restoring a standby screen in response to completion of a functional process; determining whether or not a display mark indicative of newly incoming mail can be displayed in case that the functional process is a process other than a received mail process; and displaying a display mark indicative of the newly incoming mail on the standby screen depending on the result of the determination.

In order to achieve the above objects, according to a still further aspect of the present invention there is provided a message display program for a terminal device provided with a messaging function that indicates an event, the program comprising the steps of forming a first display mark indicative of an event on a screen; and forming a second display mark indicative of a new event generated while the first display mark is being displayed, the second display mark indicating the new event in a different form from that of the first display mark, juxtaposed with the first displaymark, wherein the program is operable to drive an information processor to execute those steps.

To attain the above obj ects, the message display program of the present invention for a terminal device may further comprise the step of changing the form of the first display mark in response to generation of the new event and, after a predetermined time period has passed, restoring the form of the first display mark to the form that the first display mark had before the generation of the new event and, concurrently, displaying the second display mark.

To attain the above obj ects, the message display program of the present invention for a terminal device may further comprise the step of displaying the second display mark instead of the first display mark.

To attain the above objects, the message display program of the present invention for a terminal device may further comprise the step of deleting second display mark in response to development of the new event on a screen.

In order to achieve the above objects, according to a yet further aspect of the present invention there is provided a message display program for a terminal device provided with a messaging function that indicates arrival of mail, the program comprising the steps of generating a first display mark indicative of arrival of mail on a screen; generating a second display mark indicative of arrival of newly incoming mail instead of the first display mark in case that the screen is being used by a functional process in execution; and generating a third display mark indicative of arrival of newly incoming mail separately from the first display mark in case that the screen is not being used by a functional process in execution, wherein the program is operable to drive an information processor to execute those steps.

In order to attain the above objects, according to a still yet further aspect of the present invention there is provided a message display program for a terminal device provided with a messaging function indicating arrival of mail, the program comprising the steps of restoring a standby screen in response to completion of a functional process; determining whether or not a display mark indicative of newly incoming mail can be displayed in case that the functional process is a process other than a received mail process; and displaying a display mark indicative of the newly incoming mail on the standby screen depending on the result of the determination, wherein the program is operable to drive an information processor to execute those steps.

As described above, according to the terminal device and its message display method and message display program of the present invention, as to a plurality of events such as arrivals of mail, etc., generated on a terminal device, the recognition accuracy can be improved and convenience of the terminal device can be improved because respective arrivals of the new and old events are notified using displays respectively in different forms.

The features and advantages of the present invention are listed as follows.

(1) Because new and old events are displayed respectively in different forms, recognition of the new events can be improved and inconvenience such as forgetting to confirm each event, etc. can be avoided.

(2) In case that, for example, incomingmail has arrived in the unread mail as a new and an old event respectively, the display for the incoming mail is different from that for the unread mail. Therefore, recognition of incoming mail can be improved and forgetting to open the incoming mail, etc. can be avoided, as well as a more efficient and simplified operation for recognizing the mail can be facilitated because the operation to open the mail to confirm whether the mail is newly-incoming mail or the unread mail is not necessary.

### BRIEF DESCRIPTION OF THE DRAWINGS

The above and other objectives, aspects, features and advantages of the present invention will become more apparent from the following description of the embodiments when taken in conjunction with the accompanying drawings, in which:

Figs. 1A to 1C show display forms of a display unit of a mobile telephone provided with a picture taking function;

Fig. 2 shows a mobile telephone according to a first embodiment of a terminal device of the present invention;

Fig. 3 is a block diagram showing the configuration of a mobile telephone;

Figs. 4A to 4C show examples of a display form during a functional processing;

Figs. 5A to 5C show other display forms during the functional processing;

Figs. 6A to 6C show display forms of the display unit during standby;

Fig. 7 is a flowchart showing an example of a process procedure of display control according to an embodiment of a message display method and a message display program of a terminal device of the present invention;

Fig. 8 is a flowchart showing another process procedure of display control;

Fig. 9 is a flowchart showing yet another process procedure of display control;

Fig. 10 is a flowchart showing yet another process procedure of display control;

Fig. 11 is a flowchart showing yet another process procedure of display control;

Fig. 12 shows a display form of the display unit during standby;

Fig. 13A is a perspective view showing a mobile personal computer according to a second embodiment of the present invention and Fig. 13B shows a display form of the mobile personal computer of Fig. 13A; and

Fig. 14A is a perspective view showing a PDA according to a third embodiment of the present invention and Fig. 14B shows a display form of the PDA of Fig. 14A.

### DETAILED DESCRIPTION OF THE PREFERRED EMBODIMENTS

First Embodiment

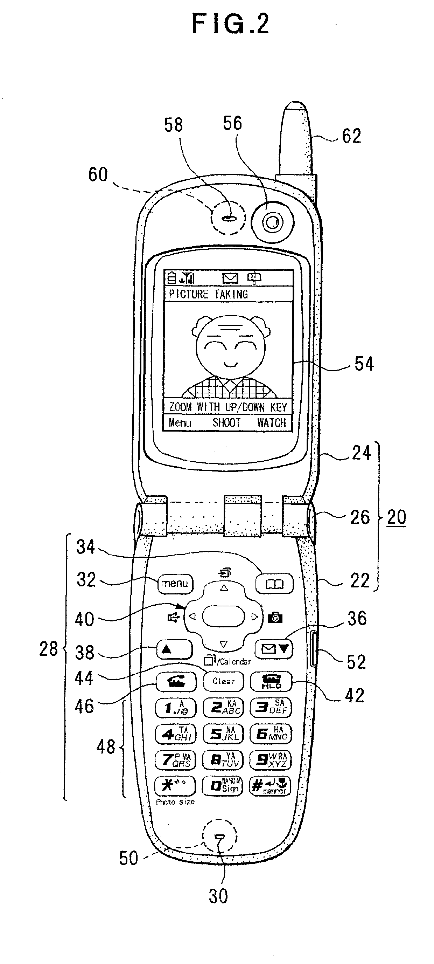

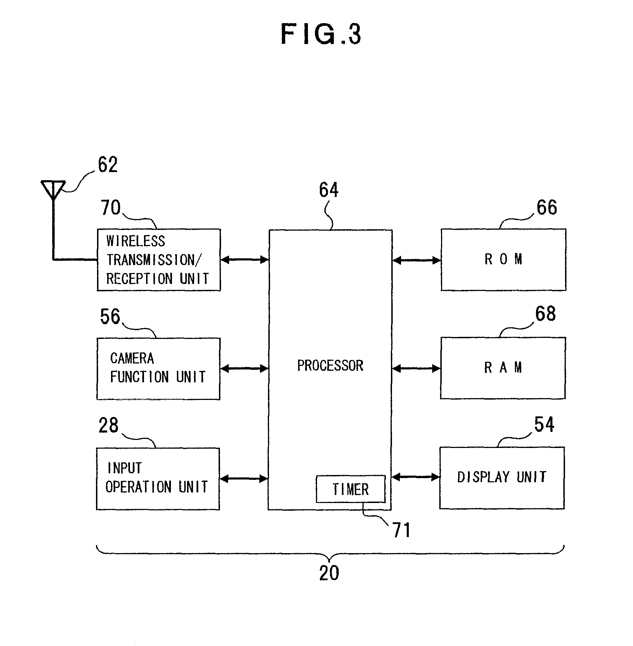

A first embodiment of a terminal device of the present invention will be described referring to Figs. 2 and 3. Fig. 2 shows a mobile telephone according to the first embodiment and Fig. 3 shows the hardware configuration of the mobile telephone.

This mobile telephone 20 is an example of a terminal device and is provided with a camera function in addition to a communication function such as a telephone function, etc. This mobile telephone 20 is provided with a first and a second housing units 22 and 24 and these housing units 22 and 24 are connected with each other by a hinge unit 26 and are adapted to be able to be opened and closed. An input operation unit 28 and a speech inlet 30 are arranged on the front face of the housing unit 22. Such a plurality of key switches are provided on the input operation unit 28 as, for example, a menu key 32, a telephone number retrieval key 34, a mail scroll key 36, an application selecting/scroll key 38, a cursor key 40, a power and end key 42, a clear key 44, a start key 46, a dial/character key 48, etc. In addition, a microphone 50 is provided inside the speech inlet 30. A shutter key 52 is provided on a side face of the housing unit 22. A display unit 54, a camera function unit 56 and a speech outlet 58 are arranged on the front face of the housing unit 24 and a speaker 60 is arranged inside the speech outlet 58. An antenna 62 is provided on the back face of the housing unit 24.

Then, as shown in Fig. 3, this mobile telephone 20 is provided with a processor 64 as a control unit for executing various types of information processes such as message display control, mail transmission/reception control, call control, etc. This processor 64 is connected with an ROM (Read-Only Memory) 66, an RAM (Random-Access Memory) 68, a wireless transmission/reception unit 70, a display unit 54, the camera function unit 56 and the input operation unit 28. The processor 64 is embedded with a timer 71 and this timer 71 is used for timing control, for example, for changing the display form of the mail display after a predetermined time period from arrival of mail, using the arrival as a trigger. This timer 71 is not limited as to the hardware configuration thereof and can be configured as a timer function by software. The ROM 66 stores various types of such information process programs to be executed on the processor 64 as a message display control program, a mail transmission/reception control program, a picture taking control program, a call control program, etc. The RAM 68 stores data for information processing. The wireless transmission/reception unit 70 receives a signal electric wave through the antenna 62 from a telephone office and reproduces sound, images, mail, etc. as well as transmits a signal electric wave of received sound, images, mail, etc. through the antenna 62 to a telephone office. The display unit 54 consists of, for example, an LCD (Liquid Crystal Display) display device, constitutes a standby display screen, a function display screen, etc., is used for various types of displays such as a telephone number display during a call, a display of mail sentences, an icon display indicating arrival of mail, an image display, etc. and is used as a finder during the camera function process. The camera function unit 56 executes picture taking in a camera mode and a shot image is displayed on the display unit 54. The input operation unit 28 is constituted of the plurality of key switches such as the cursor key 40, etc. arranged on the housing unit 22 already described.

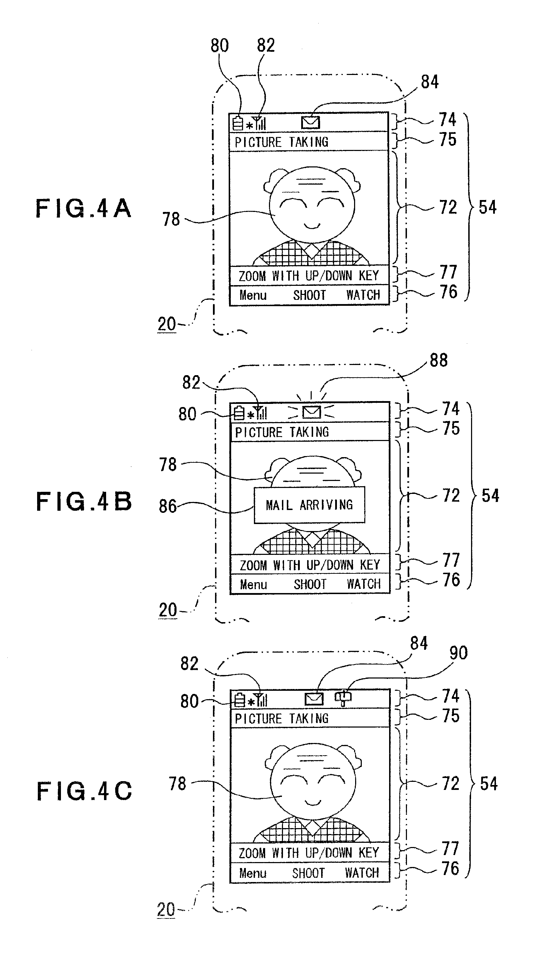

Next, screen displays on the display unit 54 of this mobile telephone 20 during the functional processes will be described referring to Figs. 4A to 4C. Figs. 4A to 4C show examples of screen displays on the display unit 54 during picture taking. Fig. 4A shows a display during picture taking when unread mail is present. Fig. 4B shows a display when incoming mail has arrived during picture taking. Fig. 4C shows a display when the newly incoming mail is present during picture taking.

In case that the display unit 54 is used as a finder in the picture taking mode, as shown in Fig. 4A, a widest display area 72 is set in the central portion of a screen on the display unit 54 and display areas 74, 75, 76 and 77 are set in the top portion and the bottom portion of this display area 72. An image representing the content of the current functional operation is displayed in the display area 72 and, during picture taking, a shot image 78 is displayed. The display area 75 is used for a task bar and "picture taking" is displayed therein as a display representing the content of the task processed currently. "Menu", "shoot" and "watch", for example, are displayed in the display area 76 as displays representing a menu for the picture taking and "zooming with up/down key", for example, is displayed in the display area 77 as a display representing guiding information for the functional processes.

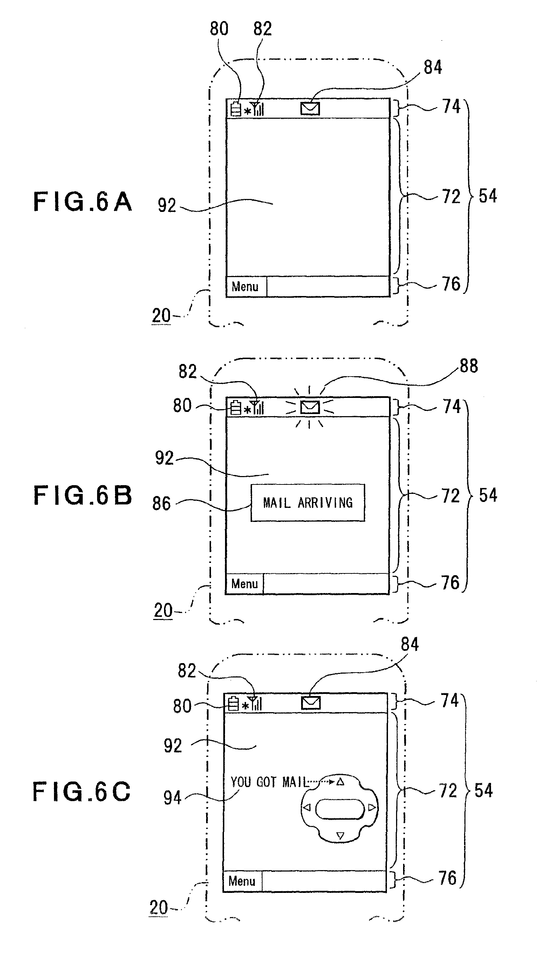

Then, the display area 74 is used for a display other than the functional display currently operating and a battery remaining amount icon 80, an electric wave reception level icon 82, etc. are displayed therein similarly to a reception standby screen (Fig. 6) and, furthermore, when unread mail is present, a unread-mail icon 84 representing the presence of the unread mail is displayed therein as a first display mark. In this case, the unread-mail icon 84 takes a form of a display representing an envelope. Therefore, even when the display area 72 is dominated as a process screen during picture taking, the unread-mail icon 84 appears in the display area 74 regardless of the functional process currently being executed. Therefore, a user can recognize the presence of the unread mail even during picture taking.

Moreover, when incoming mail arrives, for example, as a new event during picture taking, as shown in Fig. 4B, during the arrival of the mail, a message 86 indicating the arrival is displayed in the display area 72 and, concurrently, the unread-mail icon 84, for example, is changed to and displayed as a flashing mail display mark 88 as a display indicating the incoming mail. In this case, the message 86 is displayed overwritten as "mail arriving" on the shot image 78 currently processed. The flashing mail display mark 88 is originated from the unread-mail icon 84 and constitutes a flashing display by varying the intensity thereof at a predetermined timing. In order to obtain this display aspect, for example, the flashing mail display mark 88 may be overwritten on the unread-mail icon 84 that is the old display, using the arrival of the incoming mail as a trigger.

Then, when a predetermined time period has passed from the arrival of the mail, as shown in Fig. 4C, the message 86 is cancelled and the flashing mail display mark 88 is changed to the unread-mail icon 84 that is the original display. Thereafter, when the incoming mail having arrived newly is not confirmed, a mail-arrived icon 90 is displayed together with the unread-mail icon 84, as a second display mark indicating the newly incoming mail.

Therefore, even during picture taking, the respective presence of the unread mail and the newly incoming mail that are respectively the old and new events is displayed by the unread-mail icon 84 and the mail-arrived icon 90 and these icons 84 and 90 are displayed in juxtaposition with each other in the display area 74. Therefore, the user can recognize the respective presence of the unread mail and the newly incoming mail and the inconvenience such as loss of the opportunity to confirm the newly incoming mail, etc. can be avoided.

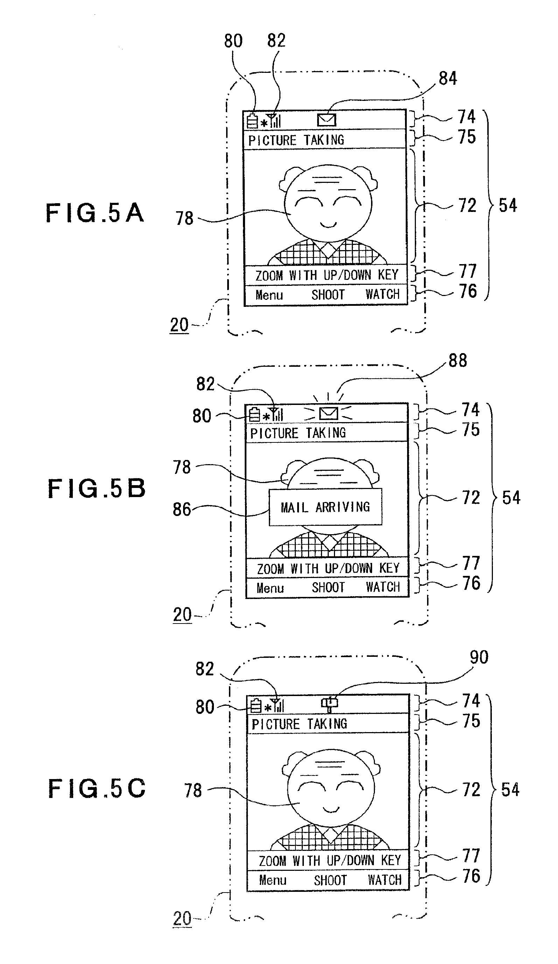

Moreover, as to the screen display during a functional process of the display unit 54 of this mobile telephone 20, for example, as shown in Fig. 5A, the unread-mail icon 84 is displayed on the screen display as the display unit 54 during picture taking. Then, when, for example, incoming mail arrives as a new event during picture taking, as shown in Fig. 5B, a message 86 indicating the arrival is displayed in the display area 72 during the arrival of the incoming mail as well as the unread-mail icon 84 is changed to the flashing mail display mark 88 , for example, and is displayed as a display indicating the newly incoming mail. Then, after a predetermined time period has passed, as shown in Fig. 5C, a mail-arrived icon 90 may be displayed instead of the flashing mail display mark 88 when the newly incoming mail is not confirmed.

Next, the reception standby screen display of the display unit 54 of this mobile telephone 20 will be described referring to Figs. 6A to 6C. Figs. 6A to 6C show examples of screen displays of the display unit 54. Fig. 6A shows a display for the case where the unread mail is present. Fig. 6B shows a display for the case where the incoming mail is arriving. Fig. 6C shows a display for the newly incoming mail.

As shown in Fig. 6A, the widest display area 72 is set in the central portion as the main screen on the display unit 54. The display areas 74 and 76 are set in the top portion and the bottom portion of this display area 72. In the display area 72, a pre-installed image, etc. are displayed for reception stand by screen for which no function is operated by a user and a reception standby image 92 indicating the reception standby state is displayed. In this example, a blank screen is displayed as the reception standby screen. In this case, in the display area 76, "Menu", for example, is displayed as a display representing a menu and a blank column is formed due to the standby state.

Then, in the display area 74, the unread-mail icon 84 indicating the presence of the unread mail that have been already generated as well as the battery remaining amount icon 80 and the electric wave reception level icon 82, etc. are displayed. In this example, the display area 72 is dominated by the reception standby screen 92. However, on the reception standby screen such as the initial screen, etc., the display area 74 is also secured and the unread-mail icon 84 indicating the unread mail for the case where the unread mail is present as well as the battery remaining amount icon 80 the electric wave reception level icon 82, etc. are displayed in the display area 74. Therefore, even when incoming mail has arrived and the user leaves the mail not read, the unread-mail icon 84 appears in the display area 74. Therefore, the presence of the unread mail can be learned through the unread-mail icon 84.

Moreover, when incoming mail arrives, for example, as a new event while the mobile telephone 20 is on standby, as shown in Fig. 6B, during the arrival of the incoming mail, the message 86 indicating the arrival is displayed as well as the unread-mail icon 84 is, for example, changed to and displayed as a flashing mail display mark 88 as a display indicating the incoming mail, in the display area 72. In this case, the message 86 is displayed overwritten as "mail arriving" on the reception standby image 92. The flashing mail display mark 88 is originated from the unread-mail icon 84 and constitutes a flashing display by varying the intensity thereof at a predetermined timing. These steps are same as described already.

Then, on the reception standby screen, as shown in Fig. 6C, after the message 86 is cancelled and the flashing mail display mark 88 is changed back to the unread-mail icon 84 that is the original display thereof, a mail display mark 94 is merged into the reception standby image 92 of the display area 72 and is displayed as a third display mark indicating the newly incoming mail. With these displays, the user can recognize the presence of the newly incoming mail and the inconvenience such as loss of the opportunity to confirm the mail, etc. can be avoided.

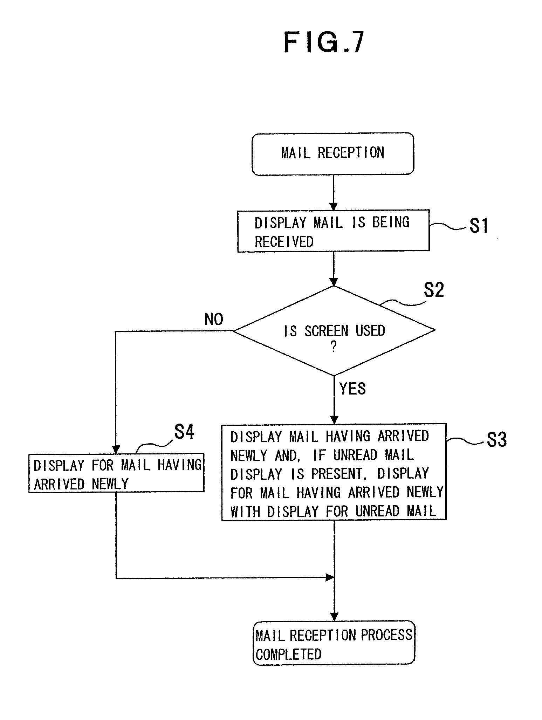

Next, message display control of the mobile telephone 20 will be described referring to Fig. 7. Fig. 7 shows a process procedure of a mail reception process that is an example of a message display method and a message display program of a mobile telephone according to an embodiment of the present invention.

In this mail reception process, the state of receiving mail is displayed when the mail is being received (a step S1). As already described, this display during the reception of the mail is the display process of Fig. 4B or Fig. 5B, and the flashing mail mark 88 and the message 86 indicating that the mail is being received are displayed. Then, whether or not the screen (the main screen) on the display unit 54 is being used is determined (a step S2) and, if the screen is being used, the mail-arrived icon 90 of Fig. 4C is displayed and, when the unread-mail icon 84 is being displayed, the mail-arrived icon 90 is displayed in juxtaposition with the unread-mail icon 84 (a step S3) and the mail reception process is ended. In the process at the step S2, if the main screen is not being used, the mail display mark 94 is displayed on the reception standby image 92 constituting the main screen (a step S4) and the mail reception process is ended.

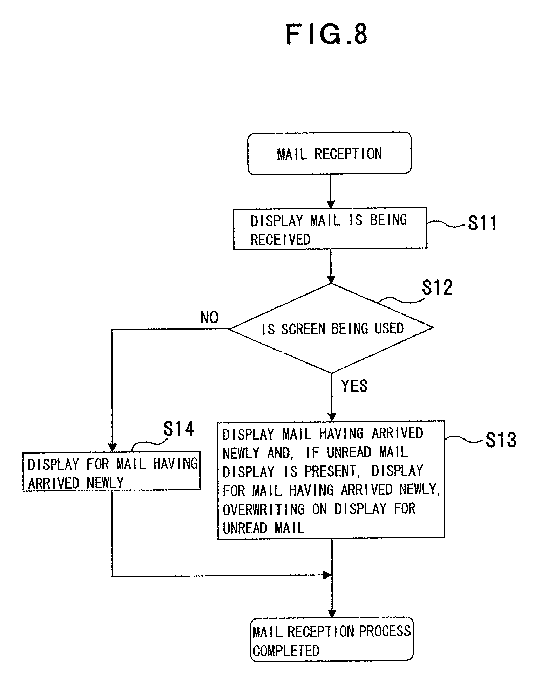

In the message display control, for example, as shown in Fig. 8, when displaying for the newly incoming mail (a step S13) is executed after displaying for the state of reception of mail (a step S11) and determination of whether or not the screen is being used (a step S12), in the process at the step S13, as shown in Fig. 5C, the mail-arrived icon 90 may be displayed overwritten on the unread-mail icon 84 and the unread-mail icon 84 may be deleted. Then, if the screen is not being used, the display for the newly incoming mail is executed (a step S14) and the mail reception process is ended.

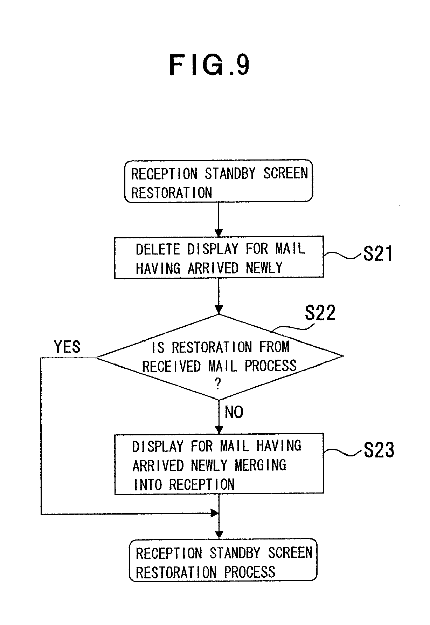

Next, the message display control of this mobile telephone 2 will be described referring to Fig. 9. Fig. 9 shows a process procedure of a reception standby screen restoring process as another display control of the message display method and the message display program of the mobile telephone according to an embodiment of the present invention.

When the reception standby screen is restored, after the mail-arrived icon 90 shown in Fig. 4C or 5C has been deleted (a step S21), whether or not the restoration to the reception standby screen is restoration from the received mail process is determined (a step S22) and, if the restoration is from those other than the received mail process, as shown in Fig. 6C, a display indicating that the restoration is from those other than the received mail process is displayed by merging the mail display mark 94 into the reception standby image 92 on the reception standby screen, and the reception, standby screen restoration process is ended. In the case for restoration from the received mail process to the standby state, the reception standby screen restoration process is completed.

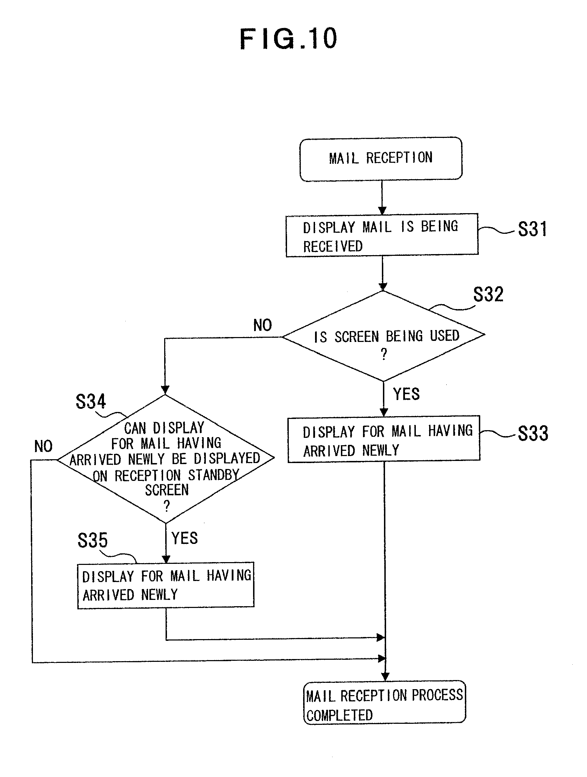

Next, another message display control of this mobile telephone 20 will be described referring to Fig. 10. Fig. 10 shows a process procedure of a mail reception process as another display control of the message display method and the message display program of the mobile telephone according to an embodiment of the present invention.

A display indicating that mail is being received is displayed (a step S31) and whether or not the screen is being used is determined (a step S32). Then, if the screen is being used, the mail-arrived icon 90 shown in Fig. 4C is displayed. In this case, as shown in Fig. 4A or 5A, if the unread-mail icon 84 is displayed, as shown in Fig. 4C, the mail-arrived icon 90 is displayed together with the unread-mail icon 84, or, as shown in Fig. 5C, only the mail-arrived icon 90 is displayed by overwriting the mail-arrived icon 90 on the unread-mail icon 84, and the mail reception process is completed. If the screen is not being used at the step S32, whether or not the display for the newly incoming mail can be displayed on the reception standby screen is determined (a step S34) and, if the display can be displayed, as shown in Fig. 6C, the mail display mark 94 is merged into the reception standby image 92 and is displayed on the reception standby screen, and the mail reception process is completed. If the display for the newly incoming mail can not be displayed on the reception standby screen at the step S34, the mail reception process is completed.

In this manner, when whether or not a display is displayed is determined based on the determination whether or not the display for the newly incoming mail can be displayed on the reception standby screen, degradation of the legibility of the display for the newly incoming mail can be prevented and the reliability of the display can be improved in case that, for example, the image on the initial screen pre-installed in the mobile telephone 2 is changed to another screen, etc.

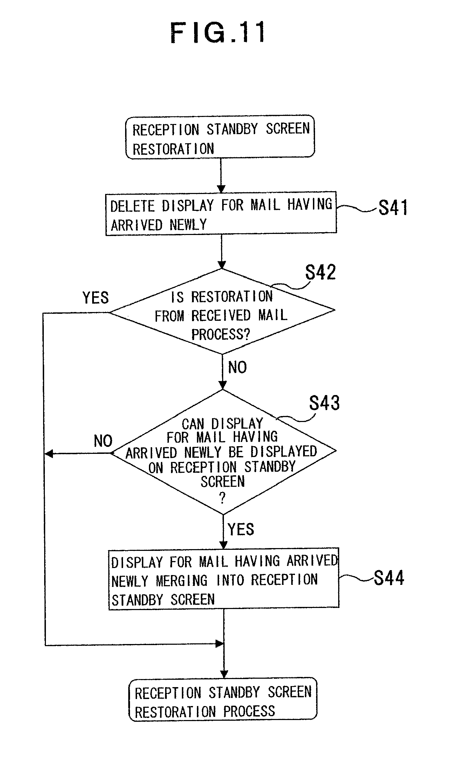

Next, the message display control of this mobile telephone 2 will be described referring to Fig. 11. Fig. 11 shows a process procedure of a reception standby screen restoration process as another display control of the message display method and the message display program of the mobile telephone according to an embodiment of the present invention.

When the reception standby screen is restored, the mail-arrived icon 90 is deleted (a step S41), whether or not the restoration to the reception standby screen is from the received mail process is determined (a step S42) and, if the restoration is from the received mail process, the reception standby screen restoration process is completed. If the reception standby screen restoration is not from the received mail process, whether or not the display for the newly incoming mail can be displayed on the reception standby screen is determined (a step S43) and, if the display can not be displayed, the reception standby screen restoration process is completed. If the display can be displayed, as shown in Fig. 6C, the mail display mark 94 is merged into the reception standby image 92 and is displayed on the reception standby screen and the reception standby screen restoration process is completed. The determination at the step S43 is in order to secure the reliability and the legibility of the display.

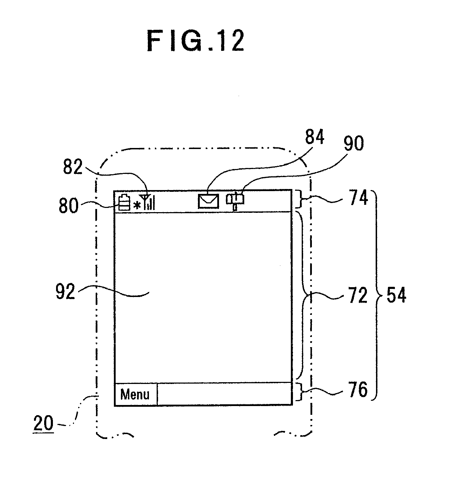

In case that the display for the newly incoming mail can not be displayed on the reception standby screen, etc., instead of the mail display mark 94 shown in Fig. 6C, for example, as shown in Fig. 12, the procedure may be adapted to execute the display of the mail-arrived icon 90 in the display area 74.

### Second Embodiment

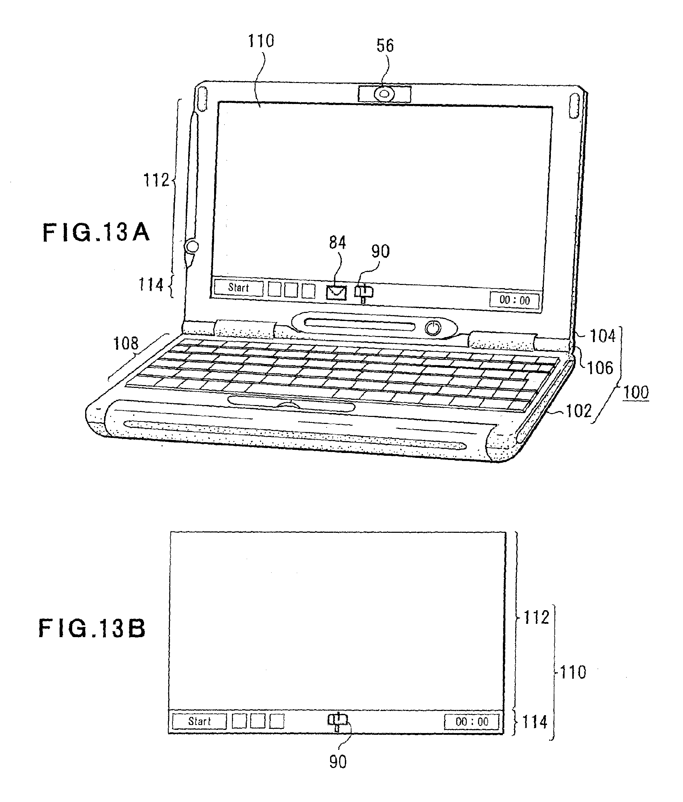

A second embodiment of a terminal device of the present invention will be described referring to Figs. 13A and 13B. Figs. 13A and 13B show a portable personal computer according to the second embodiment and Fig. 13A shows an external view and Fig. 13B shows a display screen of the computer.

As shown in Fig. 13A, this portable personal computer 100 is an example of a terminal device of the present invention and, similarly to the mobile telephone 20 already described, is provided with a first and a second housing units 102 and 104, and these housing units 102 and 104 are connected with each other by a hinge unit 106 and are adapted to be able to be opened and closed. An input operation unit 108 is installed on the upper face of the housing unit 102 and this input operation unit 108 is constituted of a key board consisting of a plurality of keys. A display unit 110 and a camera function unit 56 are installed in the front face portion of the housing unit 104. Then, this portable personal computer 100 is provided with a configuration enabling an information process same as that in the mobile telephone 20 already described as shown in Fig. 3 and can execute the various processes (Figs. 4 to 12) exemplified as the first embodiment.

Then, display areas 112 and 114 are set on the screen of the display unit 110. The display area 112 is used for displaying various types of information such as images for the information processes, etc. The display area 114 is used for displaying tasks and the unread-mail icon 84 and the mail-arrived icon 90 that have been already described are displayed therein.

For displaying the mail-arrived icon 90 on the display unit 110, only the mail-arrived icon 90 may be displayed by overwriting the mail-arrived icon 90 on the unread-mail icon 84 as shown in Fig. 13B.

### Third Embodiment

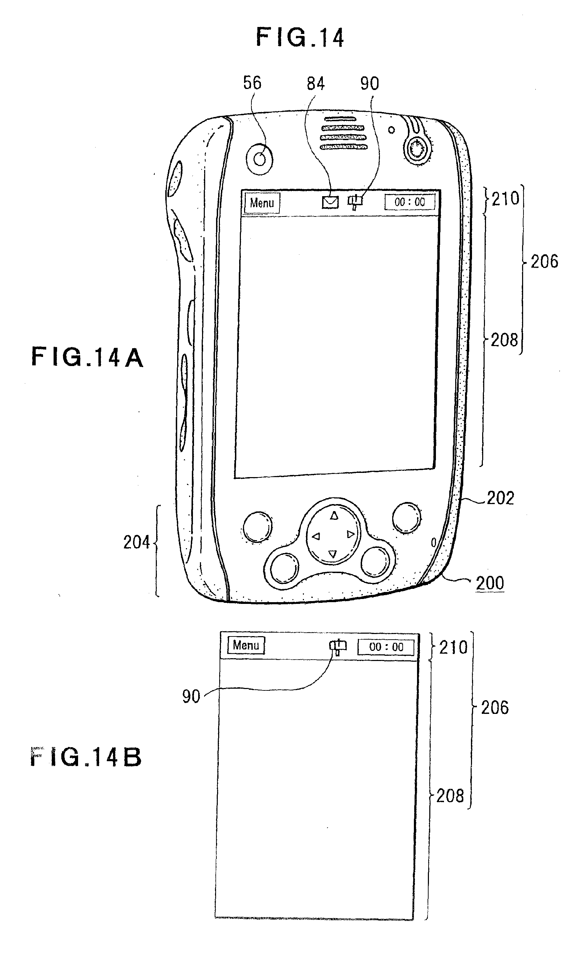

A third embodiment of a terminal device of the present invention will be described referring to Figs. 14A and 14B. Figs. 14A and 14B show a PDA (Personal Digital Assistant) according to the third embodiment and Fig. 14A shows an external view and Fig. 14B shows a display screen of the PDA.

This PDA 200 is an example of the terminal device of the present invention as shown in Fig. 14A and is provided with a housing unit 202. An input operation unit 204 is installed to the housing unit 202 and this input operation unit 204 consists of a plurality of keys. A display unit 206 and a camera function unit 56 are installed in the front face portion of the housing unit 202. Then, this PDA 200 is provided with a configuration enabling information processes same as those in the mobile telephone 20 already described as shown in Fig. 3 and can execute the various processes (Figs. 4 to 12) exemplified as the first embodiment.

Then, display areas 208 and 210 are set on the screen of the display unit 206. The display area 208 is used to display various types of information such as images for the information processes, etc. The display area 210 is used for displaying tasks and the unread-mail icon 84 and the mail-arrived icon 90 that have been already described are displayed therein.

For the display unit 206, only the mail-arrived icon 90 may be displayed as shown in Fig. 14B.

As to the embodiments described above, the characteristics, modification examples, etc. will be listed as follows.

(1) In the above embodiments, the reception standby screen is exemplified as a standby screen. Here, the standby screen includes not only the initial screen such as the reception standby screen but also screens representing standby states displayed during the functional processes.

(2) In the above embodiments, reception of mail is exemplified as events generated to the mobile telephone, etc. However, the events that the present invention targets are not limited to this reception of mail. However, events that are generated repeatedly are included in the events that the present invention targets and the events that the present invention targets are not limited to reception of mail.

(3) In the above embodiments, when mail as an event that is the target of the unread-mail icon 84, the mail-arrived icon 90 and the mail display mark 94, is developed on the screen and is confirmed, these displays may be adapted to be deleted or changed to other displays using the development of mail on the screen, etc. as triggers.

(4) For the mail-arrived icon 90, such various display forms may be set as those having colors different from the color of the unread-mail icon 84, a bright display, a flashing display, etc to improve the recognition accuracy.

(5) In the above embodiments, the unread-mail icon 84, the mail-arrived icon 90 and the mail display mark 94, etc. are represented as displays of content indicating an event. However, these displays include various display forms such as PICT, etc.

Although the most preferred embodiments of the present invention have been described hereinabove, it is to be appreciated that the present invention is not limited to the above description and that various changes and modifications will naturally occur to those skilled in the art based on the spirit of the invention described in the appended claims or disclosed herein. Moreover, needless to say, such changes and modifications are encompassed in the scope of the present invention.

The entire disclosure of Japanese Patent Application No. 2004-231621 including specification, claims, drawings and summary are incorporated herein by reference in its entirety.

This application is a divisional application of European Patent Application No. 04257766.8, the original claims of which are set out as statements below.

Statement 1. A terminal device provided with a messaging function that indicates an event, comprising:
a first display mark indicative of an event; and
a second display mark indicative of a new event generated while the first display mark is being displayed, the second display mark indicating the new event in a different form from that of the first display mark, wherein
an old and the new events are respectively indicated by the first and second display marks.

Statement 2. A terminal device according to statement 1,
wherein the form of the first display mark is changed in response to generation of the new event and, after a predetermined time period has passed, the form of the first display mark is restored to the form that the first display mark had before the generation of the new event and, concurrently, the second display mark is displayed.

Statement 3. A terminal device according to statement 1,
wherein the second display mark is displayed in juxtaposition with the first display mark, or is displayed, instead of the first display mark.

Statement 4. A terminal device according to statement 1,
wherein the second displaymark is deleted in response to development of the new event on a screen.

Statement 5. A terminal device according to statement 1,
wherein the event is reception of mail and the new event is the newly incoming mail.

Statement 6. A terminal device provided with a messaging function indicating arrival of mail, comprising:
a first display mark indicative of arrival of mail; and
a second display mark indicative of mail having arrived newly during the first display mark is being displayed, and the second display mark indicating the newly incoming mail in a different form from that of the first displaymark, juxtaposed with the first display mark, wherein
an old and a new arrival of mail are respectively indicated by the first and second display marks.

Statement 7. A terminal device according to statement 6,
wherein the form of the first display mark is changed in response to arrival of the newly incoming mail and, after a predetermined time period has passed, the form of the first display mark is restored to the form that the first display mark had before the arrival of the newly incoming mail and, concurrently, the second display mark is displayed.

Statement 8. A message display method for a terminal device provided with a messaging function that indicates an event, the method comprising:
forming a first display mark indicative of an event on a screen; and
forming a second display mark indicative of a new event generated while the first display mark is being displayed, the second display mark indicating the new event in a different form from that of the first display mark.

Statement 9. A message display method for a terminal device according to statement 8, further comprising:
changing the form of the first display mark in response to generation of the new event and, after a predetermined time period has passed, restoring the form of the first display mark to the form that the first display mark had before the generation of the new event and, concurrently, displaying the second display mark.

Statement 10. A message display method for a terminal device according to statement 8, further comprising:
displaying the second display mark in juxtaposition with the first display mark, or displaying the second display mark instead of the first display mark.

Statement 11. A message display method for a terminal device according to statement 8, further comprising:
Deleting the second display mark in response to development of the new event on a screen.

Statement 12. A message display method for a terminal device provided with a messaging function that indicates arrival of mail, the method comprising:
generating a first display mark indicative of arrival of mail on a screen;
generating a second display mark indicative of arrival of newly incoming mail instead of the first display mark in case that the screen is being used by a functional process in execution; and
generating a third display mark indicative of arrival of newly incoming mail separately from the first display mark in case that the screen is not being used by a functional process in execution.

Statement 13. A message display method for a terminal device provided with a messaging function indicating arrival of mail, the method comprising:
restoring a standby screen in response to completion of a functional process;
determining whether or not a display mark indicative of newly incoming mail can be displayed in case that the functional process is a process other than a received mail process; and
displaying a display mark indicative of the newly incoming mail on the standby screen depending on the result of the determination.

Statement 14. A message display program for a terminal device provided with a messaging function that indicates an event, the program comprising the steps of:
forming a first display mark indicative of an event on a screen; and
forming a second display mark indicative of a new event generated while the first display mark is being displayed, the second display mark indicating the new event in a different form from that of the first display mark, juxtaposed with the first display mark, wherein
the program is operable to drive an information processor to execute those steps.

Statement 15. A message display program for a terminal device according to statement 14, further comprising the step of:
changing the form of the first display mark in response to generation of the new event and, after a predetermined time period has passed, restoring the form of the first display mark to the form that the first display mark had before the generation of the new event and, concurrently, displaying the second display mark.

Statement 16. A message display program for a terminal device according to statement 14, further comprising the step of:
displaying the second display mark instead of the first display mark.

Statement 17. A message display program for a terminal device according to statement 14, further comprising the step of:
deleting second display mark in response to development of the new event on a screen.

Statement 18. A message display program for a terminal device provided with a messaging function that indicates arrival of mail, the program comprising the steps of:
generating a first display mark indicative of arrival of mail on a screen;
generating a second displaymark indicative of arrival of newly incoming mail instead of the first display mark in case that the screen is being used by a functional process in execution; and
generating a third display mark indicative of arrival of newly incoming mail separately from the first display mark in case that the screen is not being used by a functional process in execution, wherein
the program is operable to drive an information processor to execute those steps.

Statement 19. A message display program for a terminal device provided with a messaging function indicating arrival of mail, the program comprising the steps of:
restoring a standby screen in response to completion of a functional process;
determining whether or not a display mark indicative of newly incoming mail can be displayed in case that the functional process is a process other than a received mail process; and
displaying a display mark indicative of the newly incoming mail on the standby screen depending on the result of the determination, wherein
the program is operable to drive an information processor to execute those steps.

## Claims

1. A terminal device provided with a mail receiving function, comprising:
display means to display a reception standby screen;
means to display on the reception standby screen a first display mark indicative of presence of unread mail and a second display mark indicative of receiving of mail in response to receiving mail; and
means for deleting the second display mark when confirmation is performed by a user, and further, deleting the first display mark when the unread mail is not present.

2. A terminal device according to claim 1, wherein when a mail is developed, it is determined that the confirmation is performed.

3. A message display method for a terminal device provided with a mail receiving function, comprising:
displaying a reception standby screen;
displaying on the reception standby screen a first display mark indicative of presence of unread mail and a second display mark indicative of receiving of mail in response to receiving mail; and
deleting the second display mark when confirmation is performed by a user, and further, deleting the first display mark when the unread mail is not present.

4. A message display method for a terminal device according to claim 3, further comprising determining that the confirmation is performed when a mail is developed.

5. A message display program for a terminal device provided with a mail receiving function, comprising:
displaying a reception standby screen;
displaying on the reception standby screen a first display mark indicative of presence of unread mail and a second display mark indicative of receiving of mail in response to receiving mail; and
deleting the second display mark when confirmation is performed by a user, and further, deleting the first display mark when the unread mail is not present.

6. A message display program for a terminal device according to claim 5, further comprising determining that the confirmation is performed when a mail is developed.
